(19) **Europäisches Patentamt / European Patent Office / Office européen des brevets**

(11) **EP 4 787 652 A1**

(12) **EUROPEAN PATENT APPLICATION**
published in accordance with Art. 153(4) EPC

(43) Date of publication:
05.08.2026  Bulletin 2026/32

(21) Application number: 24872159.9

(22) Date of filing: 24.09.2024

(51) International Patent Classification (IPC):
H02J 3/14 (2026.01)          E02F 9/00 (2006.01)
H02J 3/32 (2026.01)          H02J 13/00 (2026.01)

(52) Cooperative Patent Classification (CPC):
E02F 9/00; H02J 3/14; H02J 3/32; H02J 13/00

(86) International application number:
PCT/JP2024/033885

(87) International publication number:
WO 2025/070368 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023  JP 2023170969

(71) Applicant: Hitachi Construction Machinery Co.,
Ltd.
Tokyo 110-0015 (JP)

(72) Inventors:
• HOTTA, Kaito
Tsuchiura-shi, Ibaraki 300-0013 (JP)

• NIIDOME, Takashi
Tsuchiura-shi, Ibaraki 300-0013 (JP)
• TSUMURA, Hiroshi
Tsuchiura-shi, Ibaraki 300-0013 (JP)
• KURAMOCHI, Kazuyoshi
Tsuchiura-shi, Ibaraki 300-0013 (JP)
• ONO, Kuniyuki
Tsuchiura-shi, Ibaraki 300-0013 (JP)
• TOKIYOSHI, Ryo
Tsuchiura-shi, Ibaraki 300-0013 (JP)

(74) Representative: MERH-IP Matias Erny Reichl
Hoffmann
Patentanwälte PartG mbB
Paul-Heyse-Straße 29
80336 München (DE)

(54) **WORK MACHINE, POWER CONTROL METHOD, AND POWER CONTROL SYSTEM**

(57)     Provided is a work machine such as an electric excavator 100, including: a vehicle body including a work device; an AC/DC converter 111 provided to the vehicle body, for receiving power from a system power source 400; and a high voltage storage battery 112 provided to the vehicle body. The work machine operates by received power that is power received by the AC/DC converter 111 from the system power source 400 and power from the high voltage storage battery 112. The work machine includes a vehicle controller 120 for changing the received power while the vehicle body is in operation. Consequently, a work machine, a power control method, and a power control system can be provided, which are capable of more appropriately distributing power acquired from the system power source to work machines such that it is possible to promptly responded to reduction of load on the system power source.

FIG. 2

EP 4 787 652 A1

**Description**

[Technical Field]

The present invention relates to a work machine, a power control method, and a power control system, and more particularly, to a work machine that operates by both of power from a system power source and power from a battery, and a power control method and a power control system that can be preferably applied to the work machine.

[Background Art]

In recent years, work machines that operate by power have been gradually used due to environmental considerations. Methods for supplying power to the work machines include a method for supplying both of power from a system power source and power from a battery.

PTL 1 discloses an electric construction machine, in which a controller calculates own demanded power for driving a plurality of hydraulic actuators on the basis of operation signals of a plurality of operation device, computes allowable power as a power limit value that can be used by an electric motor on the basis of the own demanded power, demanded power of another electric construction machine received through a communication device, and allowable power of a power reception facility for commercial power supply, and controls power consumption of the electric motor so as not to exceed the allowable power.

[Citation List]

[Patent Literature]

[PTL 1] Japanese Patent Application Publication No. 2020-39239

[Summary of Invention]

[Technical Problem]

However, there is an upper limit to power that can be received from a system power source. On the other hand, power that is required within a work site where the system power source is shared changes from time to time depending on an operating situation of electric products, such as work machines operating in the work site, and the number of the electric products. Depending on power supply and demand situations in overall power infrastructure, an electricity company may request reduction of power use. For example, if power to be received by a work machine is not changed regardless of a request for reduction of power use from an electricity company, power may fail to be distributed to other work machines in a work site.

Thus, in regard to a system power source, power to be received by a work machine needs to be promptly changed depending on an upper limit of receivable power and a request for reduction of power.

It is an object of the present invention to provide a work machine, a power control method, and a power control system capable of promptly responding to reduction of load on a system power source.

[Solution to Problem]

In order to solve the above-mentioned problem, the present invention provides a work machine, including: a vehicle body including a work device; a power reception device provided to the vehicle body, for receiving power from a system power source; and a battery provided to the vehicle body, the work machine being configured to operate by received power that is power received by the power reception device from the system power source and power from the battery, in which the work machine includes a controller for changing the received power while the vehicle body is in operation. In this case, power acquired from the system power source can be more appropriately distributed to work machines, and hence the work machine that can promptly respond to reduction of load on the system power source can be provided.

The controller may be configured to change the received power not only while the vehicle body is in operation but also while the vehicle body is stopped. In this case, during the stop of the work machine such as at night or break time where the remaining amount of the battery does not change much, charging management within a work site can be implemented in consideration of the remaining amount of the battery in the work machine.

Furthermore, the controller may determine received power to be changed on the basis of power consumption that is power consumed by the vehicle body. In this case, power to be received from the system power source can be changed depending on an operating state of the vehicle body.

Furthermore, the controller may store the power consumption for a predetermined period therein, and determine received power to be changed on the basis of the stored power consumption for the predetermined period. In this case, power to be received from the system power source can be changed depending on power that has most recently used by the own device.

Furthermore, the predetermined period may be a period during which the vehicle body is in operation. In this case, power that has most recently used by the own device can be more accurately calculated.

Then, the work machine may include a data communication device for receiving a signal output from an external device, and the controller may change the received power on the basis of the signal received by the data communication device. In this case, power to be received by each work machine from the system power source can be changed on the basis of power used in the entire work site.

Furthermore, the signal received by the data communication device may include information on the received power that is set by an administrator on the basis of power consumed by a plurality of work machines including the work machine. In this case, power to be received from the system power source can be distributed depending on a situation of power used by a plurality of work machines.

Furthermore, the data communication device may transmit information on power consumption that is power consumed by the vehicle body to the external device, the data communication device may receive information on new power to be received from the system power source, which is determined by the external device from the power consumption for a predetermined period on the basis of the information on the power consumption, and the controller may change the received power on the basis of the information on the new power received by the data communication device. In this case, power to be received from the system power source can be set depending on power that has most recently used by the own device.

Furthermore, the data communication device may transmit information on power consumption that is power consumed by the vehicle body to the external device, the data communication device may receive information on new power to be received from the system power source, which is determined by the external device on the basis of power consumed by a plurality of work machines including the work machine, and the controller may change the received power on the basis of the information on the new power received by the data communication device. In this case, power to be received from the system power source can be distributed depending on power used by each work machine.

Then, the data communication device may receive the information on the new power that is determined by the external device such that power is distributed to the plurality of work machines without exceeding an upper limit of power that can be acquired from the system power source. In this case, when power to be received from the system power source is distributed, the power can be prevented from exceeding the upper limit of power that can be acquired from the system power source.

Furthermore, the present invention provides a power control method to be implemented by a processor executing a program recorded in a memory, including changing, for a work machine that operates by power from a system power source and power from a battery, received power that is power received by the work machine from the system power source while the work machine is in operation. In this case, the power control method that can be preferably applied to a work machine capable of promptly responding to reduction of load on a system power source can be provided.

Furthermore, the present invention provides a power control system, including: a management device for determining, on the basis of power consumption of a work machine that operates by power from a system power source and power from a battery, received power that is power received by the work machine from the system power source; and a vehicle controller mounted to the work machine, for changing power to be received by the work machine from the system power source to the received power determined by the management device while the work machine is in operation. In this case, the power control system that can be preferably applied to a work machine capable of promptly responding to reduction of load on a system power source can be provided.

[Advantageous Effects of Invention]

According to the present invention, power acquired from a system power source can be more appropriately distributed to work machines, and hence the work machine, the power control method, and the power control system capable of promptly responding to reduction of load on the system power source can be provided.

[Brief Description of Drawings]

[Fig. 1]

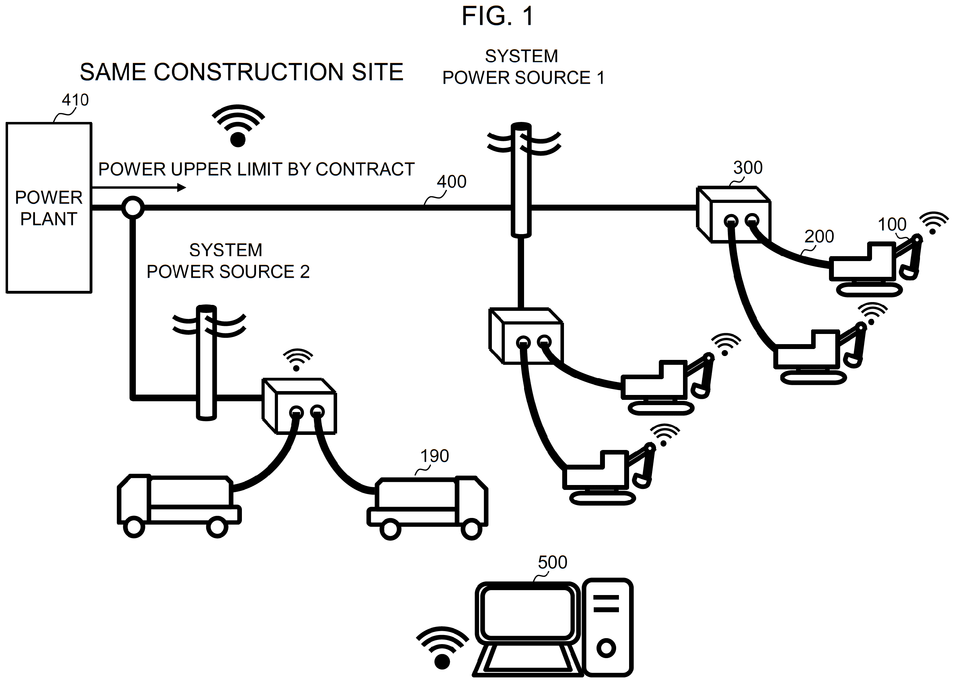

Fig. 1 is a schematic diagram illustrating an overall configuration of a work site to which the present embodiment is applied.

[Fig. 2]

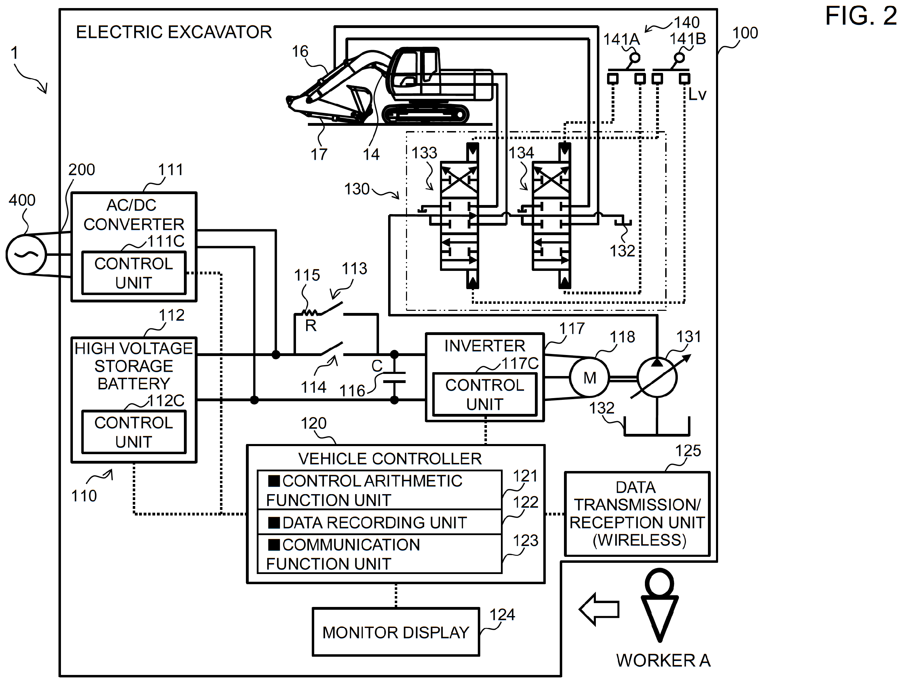

Fig. 2 is a diagram illustrating a first example of a power control system 1 in the present embodiment.

[Fig. 3]

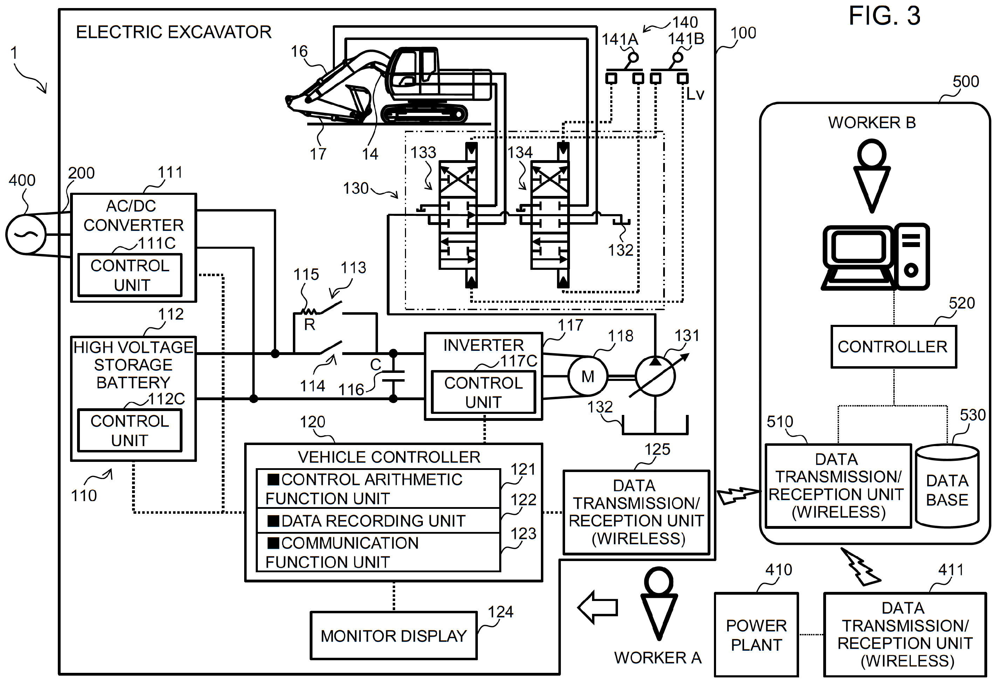

Fig. 3 is a diagram illustrating a second example of the power control system 1 in the present embodiment.

[Fig. 4]

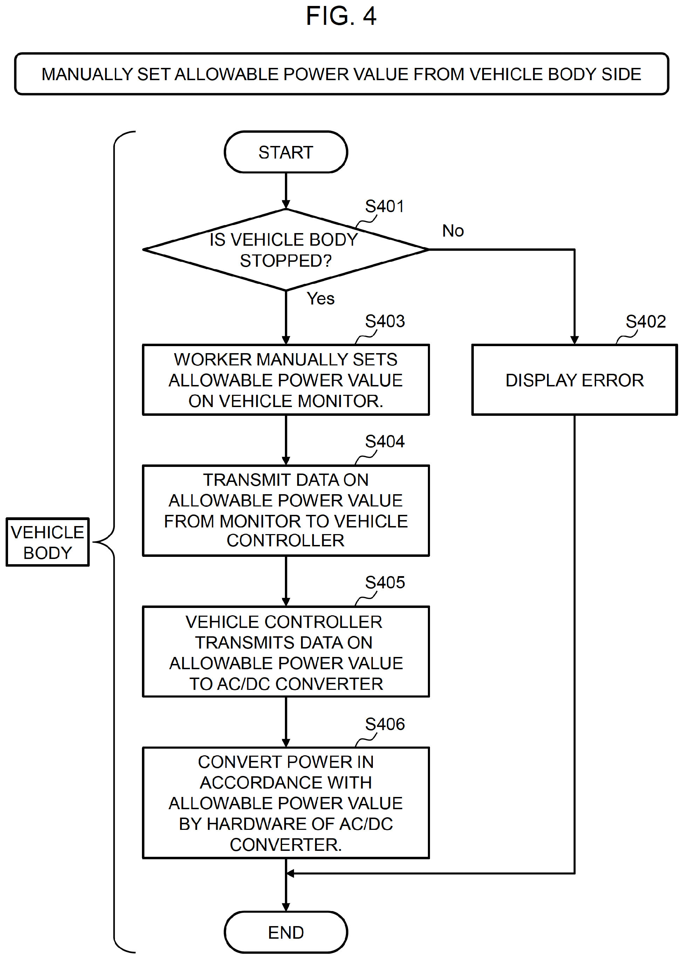

Fig. 4 is a flowchart illustrating a case where a worker A changes received power while an electric excavator is stopped.

[Fig. 5]

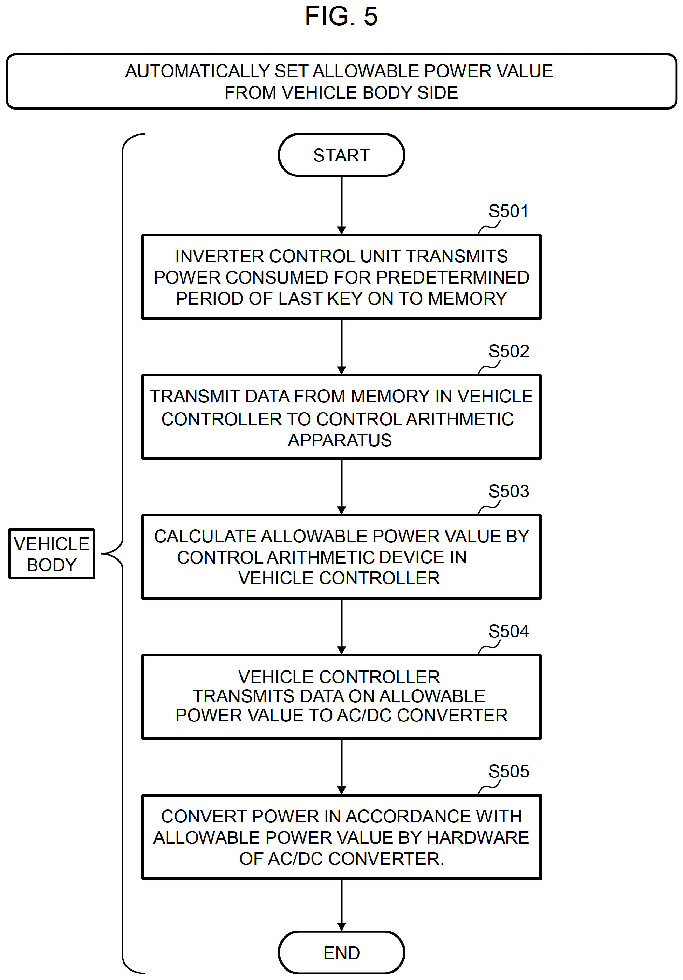

Fig. 5 is a flowchart illustrating a case where a vehicle controller calculates received power while the electric excavator is in operation and changes the received power.

[Fig. 6]

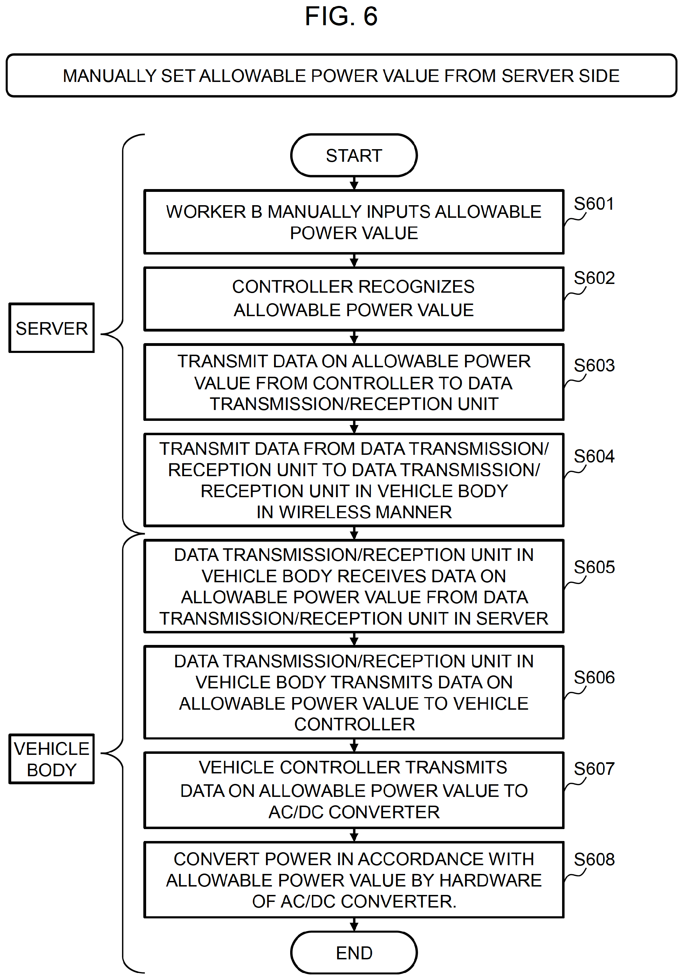

Fig. 6 is a flowchart illustrating a case where a worker changes received power while the electric excavator is in operation.

[Fig. 7]

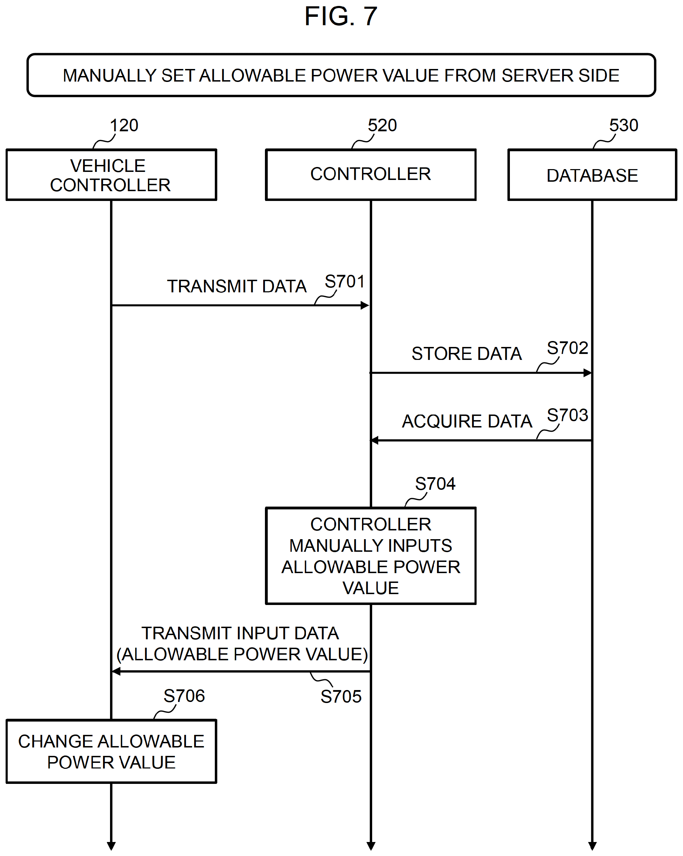

Fig. 7 is a sequence diagram illustrating exchange of data among the vehicle controller, a controller, and a database.

[Fig. 8]

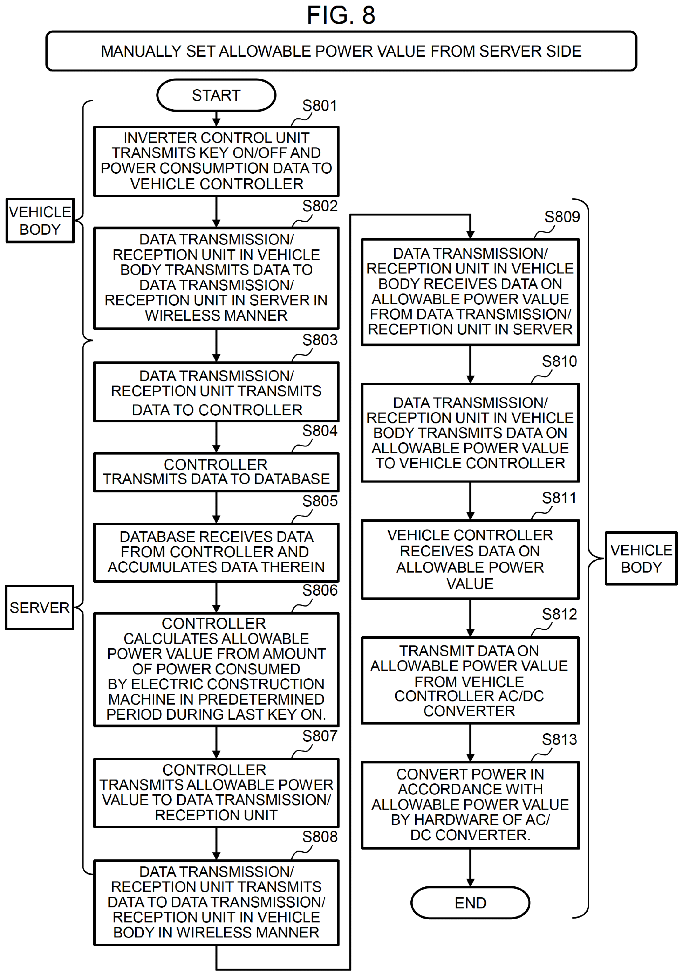

Fig. 8 is a flowchart illustrating a case where a server calculates received power while the electric excavator is in operation and changes the received power.

[Fig. 9]

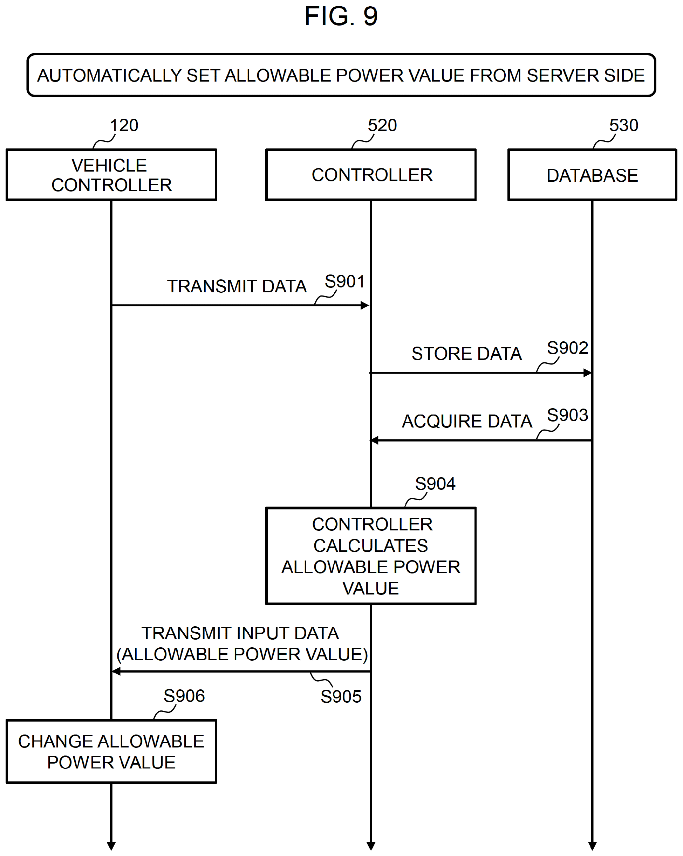

Fig. 9 is a sequence diagram illustrating exchange of data among the vehicle controller, the controller, and the database.

[Fig. 10]

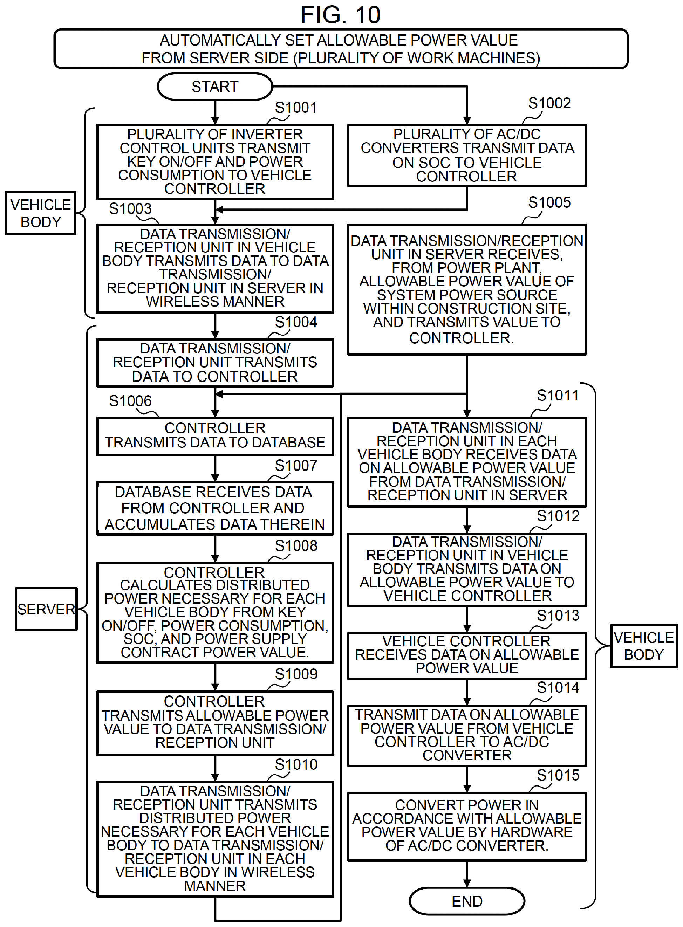

Fig. 10 is a flowchart illustrating a case where the server calculates received power while the electric excavator is in operation and changes the received power.

[Fig. 11]

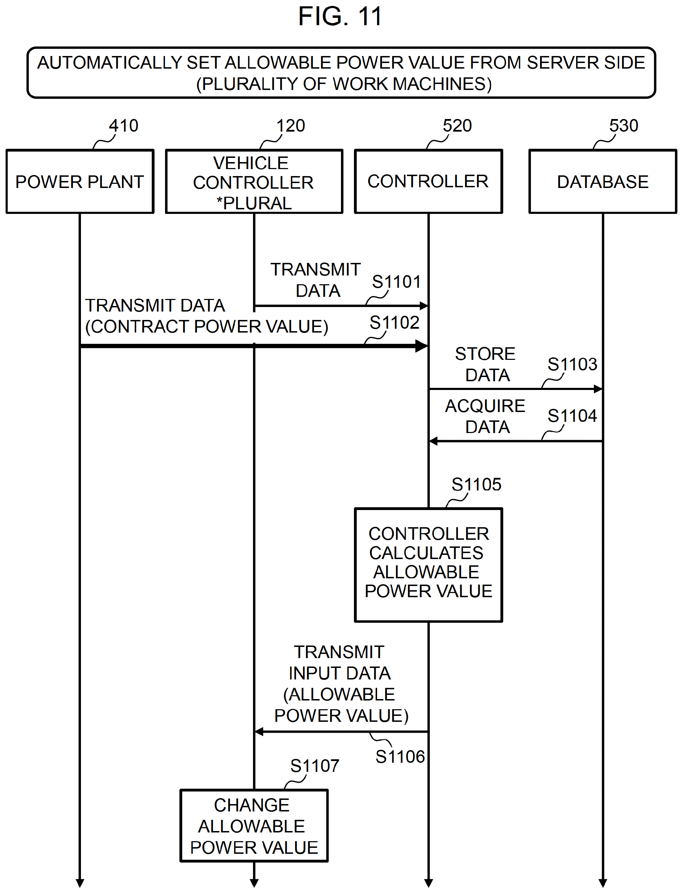

Fig. 11 is a sequence diagram illustrating exchange of data among a power plant, the vehicle controller, the controller, and the database.

[Fig. 12]

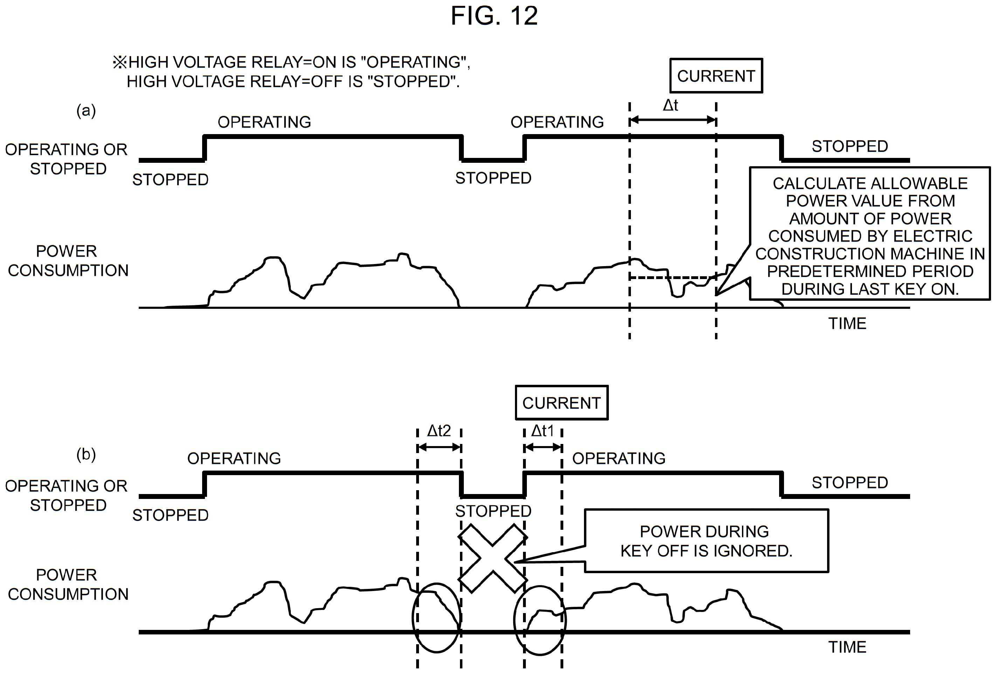

Figs. 12(a) and 12(b) are diagrams for describing last predetermined periods.

[Fig. 13]

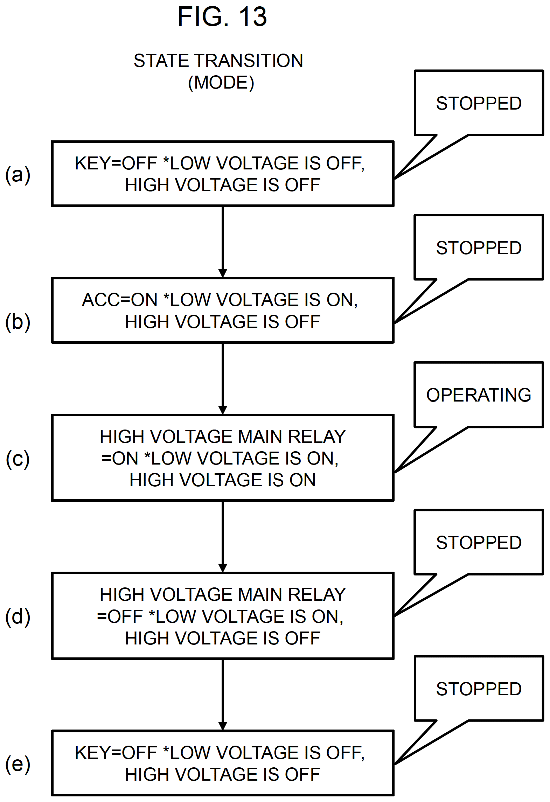

Figs. 13(a) to 13(e) are diagrams illustrating transition of a power state (mode) of an electric excavator.

[Fig. 14]

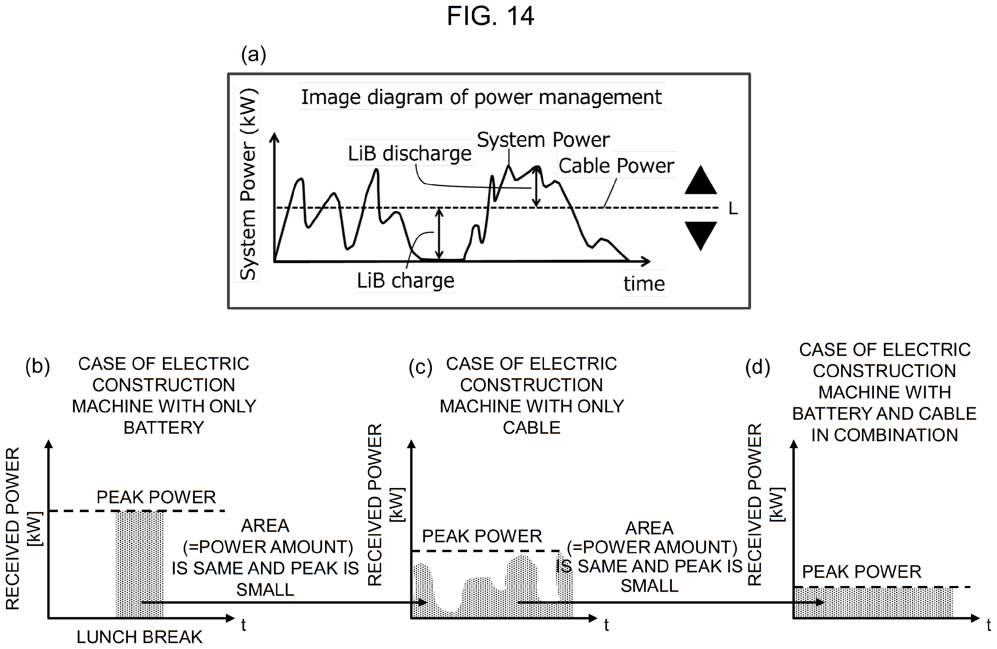

Fig. 14(a) is a diagram for describing a case of changing received power, and Figs. 14(b) to 14(d) are diagrams illustrating change of peak power when power supply is changed.

[Fig. 15]

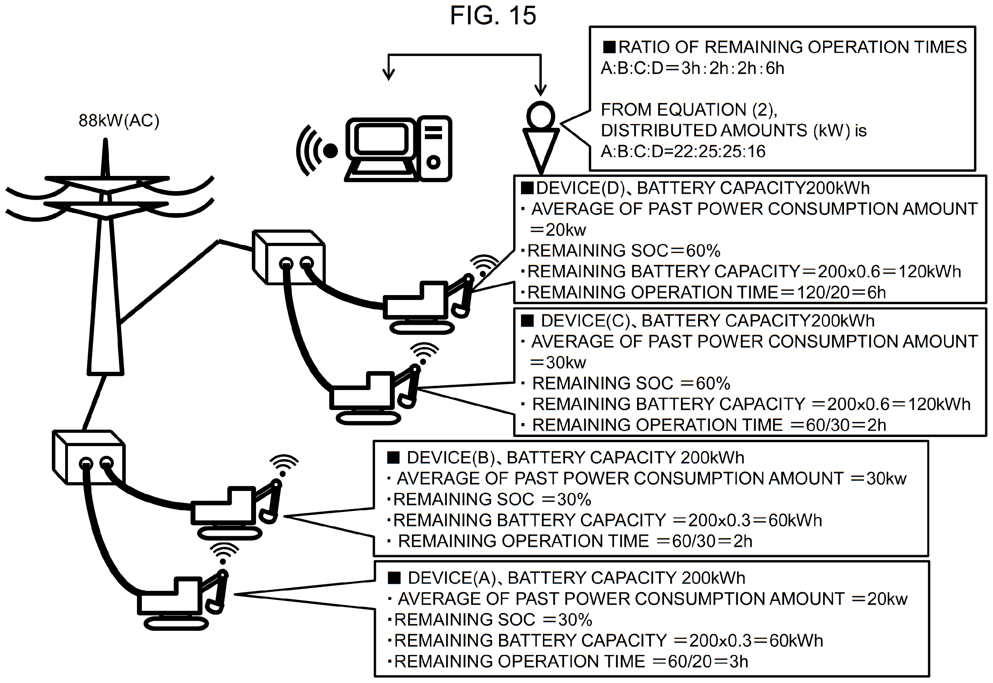

Fig. 15 is a diagram illustrating a specific example in which received power is distributed to a plurality of electric excavators.

[Description of Embodiments]

Referring to the accompanying drawings, embodiments of the present invention are described in detail below.

<Description of Overall Configuration of Work Site>

Fig. 1 is a schematic diagram illustrating an overall configuration of a work site to which the present embodiment is applied.

In the work site, a plurality of work machines operate. The illustrated work site is a construction site. Then, in the construction site, an electric excavator 100 as a work machine operates. Note that the work machine that operates in a construction site is not limited to the electric excavator 100, and may be a construction machine such as a wheel loader, a bulldozer, and a crane truck. Furthermore, the work machine that operates in a construction site may be a truck 190 that transports gravel. Note that the work site is not limited to a construction site. For example, the work site may be an agricultural site where an agricultural machine as a work machine operates. In this case, the agricultural machine may be a felling machine, a lumber machine, a tractor, a forestry machine, and a yarder.

Note that Fig. 1 illustrates a case where pieces of operating information on various kinds of work machines are collected to a server 500 by wireless communication and information for operation, inspection, and maintenance is managed.

The illustrated electric excavator 100 is an example of a work machine that operates by power from a system power source and power from a battery. The electric excavator 100 can be regarded as an example of an electric construction machine. The electric excavator 100 is connected with a power cable 200 for supplying power to the electric excavator 100. The power cable 200 is, for example, a high voltage cable capable of transmitting three-phase alternating current. The power cable 200 is connected to the electric excavator 100 and a reel type cable container 300 at both ends, and supplies power to the electric excavator 100 through the reel type cable container 300.

In the reel type cable container 300, the power cable 200 is wound around a cable reel (not shown) housed in a container, and the power cable 200 is extended toward the electric excavator 100 from the cable reel.

The reel type cable container 300 is supplied with power from the system power source 400. The system power source 400 is also called commercial power source, and is a power generated by the power plant 410 and supplied from an electricity company. In Fig. 1, power is supplied from two system power sources 400.

Power from the system power source 400 has an upper limit to power that can be used by contract. The upper limit of power is, for example, 88 VA. Thus, even when a plurality of work machines are operated, the total of power used cannot exceed the upper limit.

In a battery type work machine that operates by only power from a battery, power needs to be received from the system power source for charging, and hence if a plurality of work machines are quickly charged in a concentrated manner during break time, overload on the system power source may occur, and the quick charge operation may be affected by limitation of usable power.

Furthermore, a cable-operated type work machine that operates by only power from the system power source, when a power request based on output fluctuation of the work machine exceeds usable power, the operation of the work machine or the normal operation of the system power source may be affected.

Thus, the present embodiment employs a battery-cable combined work machine, which is configured such that power is received from a system power source and power of a battery mounted to the work machine is also used such that upper limits of usable power for work machines are individually changed depending on the state of a work site, thereby implementing both of load reduction on the system power source and responding to power request of the work machine.

However, power that is required within a work site where the system power source is shared changes from time to time depending on an operating situation of electric products such as work machines operating in the work site and the number of the electric products. Depending on power supply and demand situations in overall infrastructure, an electricity company may request reduction of power use.

In this case, a method for fixedly setting an upper limit of received power from a system power source for each work machine is insufficient for implementing both of load reduction on the system power source and responding to power request of the work machine.

Thus, in the present embodiment, a method for changing power to be received from the system power source at least while the work machine is in operation in each work machine depending on the operating situation of the work machine is employed to solve the problem.

<Description of Configuration of Power Control System 1>

Fig. 2 is a diagram illustrating a first example of a power control system 1 in the present embodiment.

In the power control system 1 illustrated in Fig. 2, power is supplied from a system power source 400 to an electric excavator 100 through a power cable 200. In the following description, the case where the work machine is the electric excavator 100 is described for simplicity of description, but it should be noted that the present embodiment can be applied to the case where the work machine is other than the electric excavator 100.

The electric excavator 100 includes a high voltage circuit 110, a vehicle controller 120, a hydraulic circuit 130, and an operation system 140.

In the illustrated electric excavator 100, the high voltage circuit 110 is, by the vehicle controller 120, controlled by the vehicle controller 120 such that power supplied from the power cable 200 is used to drive a drive motor 118 serving as a power source.

The high voltage circuit 110 includes an AC/DC converter 111, which is an example of a power reception device for receiving power from the system power source 400, for converting AC power supplied from the power cable 200 into DC, a high voltage storage battery 112 as an example of a battery, for accumulating power, a precharge relay 113 and a main relay 114 for controlling ON/OFF of the high voltage circuit 110, a resistor 115, a capacitor 116, an inverter 117 for converting DC power into AC for driving the drive motor 118, and the drive motor 118.

To turn ON the high voltage circuit 110, first, the precharge relay 113 is turned ON. Accordingly, electric charge is accumulated in the capacitor 116. Then, the main relay 114 is turned ON. In this manner, inrush current that occurs when the high voltage circuit 110 is turned ON is prevented. Furthermore, terminal welding of the high voltage circuit 110 is prevented.

The high voltage circuit 110 supplies power to the drive motor 118 by using power generated by the AC/DC converter 111 and the high voltage storage battery 112. Specifically, when load of the drive motor 118 is small, the drive motor 118 is driven by power from the AC/DC converter 111. In this case, when power supplied from the AC/DC converter 111 is surplus, the high voltage storage battery 112 is charged. On the other hand, when the load of the drive motor 118 increases and the power from the AC/DC converter 111 is insufficient, the insufficient amount of power is supplied from the high voltage storage battery 112.

Power supplied from the AC/DC converter 111 and the high voltage storage battery 112 is rectified into stable DC by the capacitor 116 repeating charge and discharge. Then, DC is converted into AC by the inverter 117 with freely selected frequency and voltage, thereby controlling the number of revolutions of the drive motor 118. In this manner, the amount of hydraulic pressure generated by a hydraulic pump 131 is controlled to operate the electric excavator 100.

The vehicle controller 120 is an example of a controller, and changes received power that is power received from the system power source 400 while the vehicle body is in operation (upper limit of power that can be received by each electric excavator 100 from system power source 400). Furthermore, the vehicle controller 120 is an example of a vehicle controller that is mounted to the electric excavator 100 and changes power to be received by the electric excavator 100 from the system power source 400 to received power determined by a server 500 while the electric excavator 100 is in operation. Then, the received power is adjusted by the AC/DC converter 111. For example, the received power can be adjusted by adjusting a resistance value in a current limiting circuit included in the AC/DC converter 111.

The vehicle controller 120 includes a control arithmetic function unit 121 (processor), a data recording unit (memory) 122, and a communication function unit 123.

The control arithmetic function unit 121 performs arithmetic operation for controlling the AC/DC converter 111, the high voltage storage battery 112, and the inverter 117. The AC/DC converter 111, the high voltage storage battery 112, and the inverter 117 are provided with control units (controllers) 111C, 112C, and 117C, respectively. The control units 111C, 112C, and 117C transmit data indicating states of the AC/DC converter 111, the high voltage storage battery 112, and the inverter 117 to the control arithmetic function unit 121. The control arithmetic function unit 121 performs arithmetic operation on the basis of the transmitted data, and transmits control signals for controlling the AC/DC converter 111, the high voltage storage battery 112, and the inverter 117 to the control units 111C, 112C, and 117C. In the case of adjusting the received power, the vehicle controller 120 transmits a command, and the control unit 111C in the AC/DC converter 111 receives the command. Then, the setting of the AC/DC converter 111 is changed, and hence the received power is changed.

The data recording unit (memory) 122 records therein program data used for arithmetic operation by the control arithmetic function unit 121.

The communication function unit 123 is a communication interface used to transmit the control signals to the control units 111C, 112C, and 117C.

Furthermore, the vehicle controller 120 is connected to a vehicle monitor 124 and a first data transmission/reception unit 125. On the vehicle monitor 124, the state of the electric excavator 100 can be displayed. Furthermore, the vehicle monitor 124 is, for example, a touch panel, and an operator can input the settings for the electric excavator 100 on the vehicle monitor 124. In the present embodiment, to be described in detail later, the vehicle monitor 124 is used for a worker A to input received power of a plurality of electric excavators 100. The worker A is, for example, an operator who operates an electric excavator.

The first data transmission/reception unit 125 is a communication interface for communicating with an external device.

The hydraulic circuit 130 includes a hydraulic pump 131 for generating hydraulic pressure, a hydraulic oil tank 132 for storing hydraulic oil therein, a first directional control valve 133, and a second directional control valve 134.

The hydraulic pump 131 is a variable displacement hydraulic pump to be driven by the drive motor 118. The hydraulic pump 131 sucks hydraulic oil from the hydraulic oil tank 132, and supplies the hydraulic oil to a rotation motor (not shown), a boom cylinder 14, an arm cylinder 16, and a bucket cylinder 17 of the electric excavator 100 through the first directional control valve 133 and the second directional control valve 134, thereby operating the electric excavator 100. Note that the boom cylinder 14, the arm cylinder 16, and the bucket cylinder 17 are sometimes simply referred to hydraulic cylinders 14, 16, and 17 unless otherwise distinguished. The hydraulic cylinders 14, 16, and 17, a boom, an arm, and a bucket (not shown) are examples of a work device.

The operation system 140 is provided to an operation room of the electric excavator 100, and is used for an operator to operate the electric excavator 100. As the operation system 140, a work mode selection switch, a motor control dial (not shown) for setting the number of revolutions of the drive motor 118 (not shown), and operation levers 141A and 141B are provided.

The operation levers 141A and 141B correspond to a rotation motor and an arm cylinder for each. For example, an electric lever for outputting an electric operation signal (lever signal Lv) corresponding to an operation amount is used.

Fig. 3 is a diagram illustrating a second example of the power control system 1 in the present embodiment.

The power control system 1 illustrated in Fig. 3 is different from the power control system 1 illustrated in Fig. 2 in that a server 500, a power plant 410, and a third data transmission/reception unit 411 for the power plant 410 are added.

The server 500 is an example of a management device for determining, on the basis of power consumption when the electric excavator 100 operates, received power that is power received by the electric excavator 100 from the system power source 400. The server 500 is an external device, and is a server computer for managing the entire power control system 1. The server 500 may be, for example, a cloud server that operates on cloud.

The server 500 includes a second data transmission/reception unit 510, a controller 520, and a database 530.

The second data transmission/reception unit 510 is a communication interface for exchanging data such as power with the electric excavator 100. In this case, the second data transmission/reception unit 510 communicates with the first data transmission/reception unit 125 connected to the vehicle controller 120 in the electric excavator 100.

The controller 520 communicates with a plurality of electric excavators 100, and acquires power used by each electric excavator 100. Then, received power of each electric excavator 100 is determined.

To be described in detail later, as a first method for determining power, a worker B determines received power of each electric excavator 100 on the basis of the acquired power. The worker B is, for example, an administrator of the power control system 1. Furthermore, as a second method for determining power, the controller 520 determines received power of each electric excavator 100 by a predetermined calculation method on the basis of the acquired power. The determined power is transmitted to each electric excavator 100 through the second data transmission/reception unit 510.

The database 530 stores a history of acquired power therein.

To be described in detail later, the third data transmission/reception unit 411 for the power plant 410 transmits an allowable power value of the system power source 400 to the server 500.

<Description of Processing Performed by Power Control System 1>

Figs. 4 to 11 are flowcharts and sequence diagrams illustrating processing performed by the power control system 1.

Of the diagrams, Fig. 4 is a flowchart illustrating a case where the worker A changes received power (hereinafter sometimes referred to as "allowable power value") while the electric excavator 100 (hereinafter sometimes referred to as "vehicle body") is stopped. In this case, the electric excavator 100 as a vehicle body includes a structure and a drive device, and constitutes a work machine.

First, the vehicle controller 120 determines whether the vehicle body is stopped (S401).

Then, when the vehicle body is in operation (No at S401), the vehicle controller 120 displays an error on the vehicle monitor 124, and finishes the processing (S402).

On the other hand, when the vehicle body is stopped (Yes at S401), the worker A manually changes an allowable power value on the vehicle monitor 124 (S403).

Next, data on the allowable power value is transmitted from the vehicle monitor 124 to the vehicle controller 120 (S404).

Furthermore, the vehicle controller 120 transmits the data on the allowable power value to the AC/DC converter 111 (S405).

Then, hardware of the AC/DC converter 111 is used to convert power in accordance with the allowable power value (S406).

The method in Fig. 4 operates in the power control system 1 illustrated in Fig. 2. With the method in Fig. 4, the vehicle controller 120 can change received power not only while the vehicle body is in operation but also while the vehicle body is stopped. Furthermore, with the method in Fig. 4, received power is determined in advance, and is input by the contractor A while the electric excavator 100 is stopped. With the method in Fig. 4, the worker A can manually change received power of the electric excavator 100 while the electric excavator 100 is stopped.

Fig. 5 is a flowchart illustrating a case where the vehicle controller 120 calculates and changes received power while the electric excavator 100 is in operation.

First, the control unit 117C in the inverter 117 transmits power consumption that is consumed in the last predetermined period during which the key is ON to the data recording unit (memory) 122 in the vehicle controller 120 (S501).

Next, the data recording unit (memory) 122 in the vehicle controller 120 transmits the above-mentioned data to the control arithmetic function unit 121 (S502).

Furthermore, the control arithmetic function unit 121 in the vehicle controller 120 calculates an allowable power value (S503).

Next, the vehicle controller 120 transmits data on the allowable power value to the AC/DC converter 111 (S504).

Then, hardware of the AC/DC converter 111 is used to convert power in accordance with the allowable power value (S505).

The method in Fig. 5 operates in the power control system 1 illustrated in Fig. 2. With the method in Fig. 5, received power to be changed is determined by the vehicle controller 120 on the basis of power consumption that is power consumed by the vehicle body. In this case, the vehicle controller 120 stores power consumption for a predetermined period therein, and determines received power to be changed on the basis of the stored power consumption for the predetermined period. More specifically, the vehicle controller 120 stores power consumption for a predetermined period in the data recording unit 122, and on the basis of the power consumption for the predetermined period stored in the data recording unit 122, determines received power to be changed by the control arithmetic function unit 121.

In this case, the vehicle controller 120 calculates received power not in consideration of power of another electric excavator 100 but on the basis of power used by the own device while the own device is in operation. In this manner, the vehicle controller 120 can automatically change received power of the electric excavator 100 while the electric excavator 100 is in operation.

Fig. 6 is a flowchart illustrating a case where the worker B changes received power while the electric excavator 100 is in operation.

First, the worker B manually inputs an allowable power value (S601). For example, the worker B monitors power used by a plurality of electric excavators 100 (vehicle bodies), and changes allowable power values depending on the working states. For example, when an electric excavator 100 works with large load and power used is large, an allowable power value of the electric excavator 100 is increased. On the other hand, when an electric excavator 100 works with small load and power used is small, an allowable power value of the electric excavator 100 is decreased. In this manner, the worker B distributes received power depending on the state of power used by each electric excavator 100 while not exceeding an upper limit of the system power source 400 in use.

Next, the controller 520 recognizes the allowable power value (S602).

Furthermore, the controller 520 transmits data on the allowable power value to the second data transmission/-reception unit 510 (S603).

Then, the data is transmitted from the second data transmission/reception unit 510 to the first data transmission/reception unit 125 in the vehicle body in a wireless manner (S604).

In the electric excavator 100, the first data transmission/reception unit 125 in the vehicle body receives the data on the allowable power value from the second data transmission/reception unit 510 in the server 500 (S605).

Next, the first data transmission/reception unit 125 in the vehicle body transmits the data on the allowable power value to the vehicle controller 120 (S606).

Furthermore, the vehicle controller 120 transmits the data on the allowable power value to the AC/DC converter 111 (S607).

Then, hardware of the AC/DC converter 111 is used to convert power in accordance with the allowable power value (S608).

Fig. 7 is a sequence diagram illustrating exchange of data among the vehicle controller 120, the controller 520, and the database 530.

When the worker B manually inputs an allowable power value, the vehicle controller 120 needs to grasp the state of power used by a plurality of electric excavators 100.

Thus, each vehicle controller 120 in the plurality of electric excavators 100 transmits power consumption data to the controller 520 (S701).

The controller 520 transmits the power consumption data to the database 530, and stores the data therein (S702).

Furthermore, the controller 520 acquires power consumption data for a predetermined period from the database 530 (S703).

The worker B who has seen the power consumption data inputs an allowable power value manually (S704). This corresponds to S601 in Fig. 6.

The controller 520 transmits data on the allowable power value to the vehicle controller 120 (S705). This corresponds to S604 in Fig. 6.

The vehicle controller 120 changes the allowable power value (S706). This corresponds to S607 in Fig. 6.

The methods in Figs. 6 and 7 operate in the power control system 1 illustrated in Fig. 3. With the methods in Figs. 6 and 7, received power is determined by the server 500 as an external device, and the vehicle controller 120 acquires the received power from the server 500 by communication. In this case, the received power is determined by the worker B as an administrator on the basis of power used by a plurality of work machines including the own device (vehicle body). In this case, the worker B distributes power to the plurality of electric excavators 100 without exceeding an upper limit of power that can be acquired from the system power source 400 (in this case, contract power value). In this manner, the worker B can manually change received power of the electric excavator 100 while the electric excavator 100 is in operation.

Fig. 8 is a flowchart illustrating a case where the server 500 calculates and changes received power while the electric excavator 100 is in operation.

First, the control unit 117C in the inverter 117 transmits information on key ON/OFF and power consumption data to the vehicle controller 120 (S801).

Next, the first data transmission/reception unit 125 in the vehicle body transmits data on these pieces of information to the second data transmission/reception unit 510 in the server 500 in a wireless manner (S802).

In the server 500, the second data transmission/reception unit 510 transmits the data to the controller 520 (S803).

Next, the controller 520 transmits the data to the database 530 (S804).

In this case, the database 530 receives the data from the controller 520, and stores the data therein (S805).

Furthermore, the controller 520 calculates an allowable power value from power consumed by the electric excavator 100 in the last predetermined period during which the key is ON (S806).

Then, the controller 520 transmits the allowable power value to the second data transmission/reception unit 510 (S807).

The second data transmission/reception unit 510 transmits data to the first data transmission/reception unit 125 in the vehicle body in a wireless manner (S808).

The first data transmission/reception unit 125 in the vehicle body receives data on the allowable power value from the second data transmission/reception unit 510 in the server 500 (S809).

The first data transmission/reception unit 125 in the vehicle body transmits the data on the allowable power value to the vehicle controller 120 (S810).

Then, the vehicle controller 120 receives the data on the allowable power value (S811).

Next, the vehicle controller 120 transmits the data on the allowable power value to the AC/DC converter 111 (S812).

Then, hardware of the AC/DC converter 111 is used to convert power in accordance with the allowable power value (S813).

Fig. 9 is a sequence diagram illustrating exchange of data among the vehicle controller 120, the controller 520, and the database 530.

First, power consumption data on the electric excavator 100 is transmitted to the controller 520 (S901). This corresponds to S802 in Fig. 8.

The controller 520 transmits the power consumption data to the database 530, and stores the data therein (S902). This corresponds to S804 and S805 in Fig. 8.

Furthermore, the controller 520 acquires power consumption data for a predetermined period from the database 530 (S903), and the controller 520 calculates an allowable power value on the basis of the acquired power consumption data (S904). This corresponds to S806 in Fig. 8.

The controller 520 transmits data on the allowable power value to the vehicle controller 120 (S905). This corresponds to S808 in Fig. 8.

The vehicle controller 120 changes the allowable power value (S906). This corresponds to S812 in Fig. 8.

The methods in Figs. 8 and 9 operate in the power control system 1 illustrated in Fig. 3. With the methods in Figs. 8 and 9, received power is determined by the server 500 as an external device, and the vehicle controller 120 acquires the received power from the server 500 by communication. In this case, the received power is calculated by the server 500 as an external device on the basis of power consumption of the electric excavator 100 as the own device in a predetermined period. In this case, the server 500 calculates the received power not in consideration of power of another electric excavator 100 but on the basis of power used by the own device while the own device is in operation. In this manner, the received power calculated by the server 500 can be automatically changed by the vehicle controller 120 while the electric excavator 100 is in operation.

Fig. 10 is also a flowchart illustrating a case where the server 500 calculates and changes received power while the electric excavator 100 is in operation. However, the method for calculating received power is different from that in Fig. 8.

First, the control unit 117C in the inverter 117 in each of a plurality of electric excavators 100 (vehicle bodies) transmits information on key ON/OFF and power consumption data to the vehicle controller 120 (S1001).

On the other hand, the control unit 112C in the high voltage storage battery 112 in each of the plurality of vehicle bodies transmits data on SOC (State Of Charge) to the vehicle controller 120 (S1002).

Next, the first data transmission/reception unit 125 in the vehicle body transmits, in a wireless manner, data on these pieces of information to the second data transmission/reception unit 510 in the server 500 (S1003).

In the server 500, the second data transmission/reception unit 510 transmits the data to the controller 520 (S1004).

On the other hand, the second data transmission/reception unit 510 in the server 500 receives an allowable power value of the system power source 400 in the construction site from the power plant 410, and transmits the value to the controller 520 (S1005).

Next, the controller 520 further transmits the data transmitted at S1004 and S1005 to the database 530 (S1006).

The database 530 receives the data from the controller 520, and stores the data therein (S1007).

Furthermore, the controller 520 calculates distributed power necessary for each vehicle body as an allowable power value of each vehicle body on the basis of the latest key ON/OFF, power consumption, SOC, and contract power value of the system power source 400 (S1008).

Then, the controller 520 transmits the allowable power value to the second data transmission/reception unit 510 (S1009).

Furthermore, the second data transmission/reception unit 510 transmits data on distributed power necessary for each vehicle body to the first data transmission/reception unit 125 in each vehicle body in a wireless manner (S1010).

The first data transmission/reception unit 125 in each vehicle body receives data on the allowable power value from the second data transmission/reception unit 510 in the server 500 (S1011).

The first data transmission/reception unit 125 in the vehicle body transmits the data on the allowable power value to the vehicle controller 120 (S1012).

Then, the vehicle controller 120 receives the data on the allowable power value (S1013).

Next, the vehicle controller 120 transmits the data on the allowable power value to the AC/DC converter 111 (S1014).

Then, hardware of the AC/DC converter 111 is used to convert power in accordance with the allowable power value (S1015).

Fig. 11 is a sequence diagram illustrating exchange of data among the power plant 410, the vehicle controller 120, the controller 520, and the database 530.

First, each vehicle controller 120 in a plurality of electric excavators 100 transmits power consumption data and the like to the controller 520 (S1101). This corresponds to S1003 in Fig. 10.

The power plant 410 transmits data on a contract power value to the controller 520 (S1102). This corresponds to S1005 in Fig. 10.

The controller 520 transmits the power consumption data and the data on the contract power value to the database 530, and stores the data therein (S1103). This corresponds to S1006 and S1007 in Fig. 10.

Furthermore, the controller 520 acquires power consumption data on the plurality of electric excavators 100 from the database 530 (S1104), and the controller 520 calculates an allowable power value on the basis of the acquired power consumption data (S1105). This corresponds to S1008 in Fig. 10.

The controller 520 transmits data on the allowable power value to the vehicle controller 120 (S1106). This corresponds to S1010 in Fig. 10.

The vehicle controller 120 changes the allowable power value (S1107). This corresponds to S1014 in Fig. 10.

The methods in Figs. 10 and 11 operate in the power control system 1 illustrated in Fig. 3. With the methods in Figs. 10 and 11, received power is determined by the server 500 as an external device, and the vehicle controller 120 acquires the received power from the server 500 by communication. In this case, the received power is calculated by the server 500 as an external device on the basis of power used by a plurality of electric excavators 100 including the electric excavator 100 as the own device. In this case, the server 500 takes power consumption of not only the own device but also other electric excavators 100 into consideration. Then, the server 500 calculates distribution of received power on the basis of power consumption used by the plurality of electric excavators 100 while the own device is in operation. In this case, the server 500 as an external device distributes power to the plurality of electric excavators 100 without exceeding an upper limit of power that can be acquired from the system power source 400 (in this case, contract power value). In this manner, the received power calculated by the server 500 can be automatically changed by the vehicle controller 120 while the electric excavator 100 is in operation.

The methods in Figs. 6 to 11 can be regarded as a configuration in which the electric excavator 100 includes the first data transmission/reception unit 125 as a data reception unit for receiving a signal output from the server 500 as an external device, and the vehicle controller 120 changes received power on the basis of the signal received by the first data transmission/reception unit 125.

Furthermore, the methods in Figs. 6 and 7 can be regarded as a configuration in which the signal received by the first data transmission/reception unit 125 includes information on received power that is set by the worker B on the basis of power consumed by a plurality of electric excavators 100 including the own machine.

Furthermore, the methods in Figs. 8 and 9 can be regarded as a configuration in which the first data transmission/reception unit 125 transmits information on power consumption that is power consumed by the vehicle body to the server 500, and receives information on new power to be received from the system power source 400 that is determined by the server 500 from the power consumption for a predetermined period on the basis of the information on the power consumption, and the vehicle controller 120 changes the received power on the basis of the information on the new power received by the first data transmission/reception unit 125.

Furthermore, the methods in Figs. 10 and 11 can be regarded as a configuration in which the first data transmission/reception unit 125 transmits information on power consumption that is power consumed by the vehicle body to the server 500, and receives information on new power that is determined by the server 500 on the basis of power consumed by a plurality of electric excavators 100 including the own machine, and the vehicle controller 120 changes the received power on the basis of the information on the new power to be received from the system power source 400 that is received by the first data transmission/reception unit 125.

<Description of Last Predetermined Period>

In Figs. 5 and 8, the controller 520 calculates an allowable power value on the basis of power consumption that is power consumed by the electric excavator 100 in a predetermined period during the last key ON. How to determine the last predetermined period is described next.

Figs. 12(a) to 12(b) are diagrams for describing the last predetermined period.

In the present embodiment, the last predetermined period is a period determined in advance back from the current time point.

Fig. 12(a) illustrates a case where this period can be sequentially acquired. Specifically, in a period $\Delta t$ determined in advance back from the current time point indicated as the present, the key of the electric excavator 100 is ON such that the electric excavator 100 is in operation, and power consumption can be acquired.

Fig. 12(a) illustrates a case where this period cannot be sequentially acquired. Specifically, in a period $\Delta t$ determined in advance back from the current time point indicated as the present, there is a period during which the key of the electric excavator 100 is OFF, and in this period, the electric excavator 100 is stopped, and hence power consumption cannot be acquired. In this case, the time goes back further, and power consumption during the period of key ON is acquired and $\Delta t$ is set such that the total of times becomes a period determined in advance. In Fig. 12(b), the period determined in advance is determined such that the total of $\Delta t1$ and $\Delta t2$, which are periods of the operating state, becomes $\Delta t$ ($\Delta t1+\Delta t2=\Delta t$). In other words, the period $\Delta t$ determined in advance is a period during which the vehicle body is in operation. Furthermore, it can be said that the period $\Delta t$ determined in advance is determined by subtracting a period during which the own device is stopped.

Alternatively, when there is a period during which the electric excavator 100 is stopped in $\Delta t$ that is the period determined in advance, an initial value determined in advance may be employed.

<Description of States where Electric Excavator Is in Operation and Is Stopped>

In the present embodiment, whether the electric excavator 100 is in operation or stopped is determined as follows.

Figs. 13(a) to 13(e) are diagrams illustrating transition of a power state (mode) of the electric excavator 100.

Figs. 13(a) to 13(e) illustrate the transition of the power state (mode) of the electric excavator 100 when the key of the electric excavator 100 is turned ON from OFF and turned OFF again.

Fig. 13(a) illustrates a power state when the key of the electric excavator 100 is removed and OFF. In this case, the low voltage circuit and the high voltage circuit 110 (see Fig. 2) are both off.

Fig. 13(b) illustrates a power state when the key is inserted to the electric excavator 100 and ACC (accessory) is turned ON. In this case, the low voltage circuit is turned on, but the high voltage circuit 110 remains off. In this power state, the vehicle controller 120, the vehicle monitor 124, and the first data transmission/reception unit 125 in the electric excavator 100 can be operated, but the hydraulic circuit 130 cannot be operated and the arm of the electric excavator 100 cannot be operated.

Fig. 13(c) illustrates a power state when the main relay 114 (see Fig. 2) in the high voltage circuit 110 is turned ON. In this case, the low voltage circuit and the high voltage circuit 110 are both on. In this power state, the hydraulic circuit 130 of the electric excavator 100 can be operated, and the arm of the electric excavator 100 can be operated.

Fig. 13(d) illustrates a power state when the main relay 114 of the high voltage circuit 110 is turned OFF. In this power state, similarly to Fig. 13(b), the low voltage circuit is on but the high voltage circuit 110 is off.

Fig. 13(e) illustrates a power state when the key of the electric excavator 100 is removed and turned OFF. In this power state, similarly to Fig. 13(a), the low voltage circuit and the high voltage circuit 110 are both turned off.

In the present embodiment, the state where the electric excavator 100 is in operation corresponds to the state in Fig. 13(c). Specifically, the low voltage circuit and the high voltage circuit 110 are both turned on.

On the other hand, in the present embodiment, the state where the electric excavator 100 is stopped corresponds to the states in Figs. 13(a), 13(b), 13(d), and 13(e). Specifically, the high voltage circuit 110 is turned off.

<Description of Effects>

Next, effects of the present embodiment are described.

As described above, in the present embodiment, the vehicle controller 120 changes received power. The timing to change the received power is at least during the operation of the electric excavator 100, but as illustrated in Fig. 4, may be during the stop of the electric excavator 100. In other words, the received power may be changed any time unless the command is received by the electric excavator 100. In the case of changing received power during the stop, charging within the work site can be managed by implementing optimal power distribution from outside the electric excavator 100 (without getting into the electric excavator 100 for driving) during the stop of the electric excavator 100, such as at night or break time where the remaining amount of the battery does not change much, in consideration of the remaining amount of the battery in the electric excavator 100.

Fig. 14(a) is a diagram for describing the case of changing received power. In Fig. 14(a), the horizontal axis indicates time, and the vertical axis indicates power consumption of the electric excavator 100.

In the diagram, the dotted line L indicates received power. Then, when power consumption of the electric excavator 100 is equal to or smaller than the dotted line L, the electric excavator 100 is operated by power from the system power source 400. In this case, the high voltage storage battery 112 as a battery is charged by surplus power from the system power source 400. On the other hand, when the power consumption of the electric excavator 100 exceeds the dotted line L, the shortage is supplemented from the high voltage storage battery 112, and the electric excavator 100 is operated by power from both of the system power source 400 and the high voltage storage battery 112. Then, in the present embodiment, the above-mentioned method is used to change received power. This corresponds to raising and lowering the dotted line L in Fig. 14(a). Note that, even when received power is changed and decreased while the electric excavator 100 is in operation, the shortage is supplemented from the high voltage storage battery 112, and hence there is no influence on the operation of the electric excavator 100 and operability for the operator.

In this manner, peak power of received power can be equalized.

Figs. 14(b) to 14(d) are diagrams illustrating change of peak power when power supply is changed.

Of the drawings, Fig. 14(b) is a diagram illustrating a case where the electric excavator 100 is operated by only a battery. In this case, when the electric excavator 100 is operated, received power is 0. However, for example, the battery needs to be charged by power from the system power source 400 during lunch break. In this case, the battery needs to be charged in a short period of time, and hence peak power is high.

Fig. 14(c) is a diagram illustrating a case where the electric excavator 100 is operated only by power from the system power source 400. Then, as compared to the case in Fig. 14(a), power is received from the system power source 400 for a longer period of time, and hence when the same amount of power as in Fig. 14(a) is received, received power is equalized and peak power becomes smaller. However, power necessary for operating the electric excavator 100 increases and decreases depending on contents of work, and hence the received power increases and decreases as illustrated. Thus, the peak power does not significantly decrease, and power is not sufficiently equalized. Note that the amount of power corresponds to the area of a portion indicated in gray.

Fig. 14(d) is the case of the present embodiment, in which the electric excavator 100 is operated by power from both of the system power source 400 and the battery. In this case, owing to the battery, as compared to Fig. 14(c), received power is more equalized and peak power is smaller.

In regard to the received power, when the peak power can be equalized, the received power can be equalized. In this case, the received power can be more efficiently distributed in response to requests of power necessary for electric excavators 100. Furthermore, in the method for determining received power of each electric excavator 100 by the server 500, the received power can be determined in response to requests of power necessary for a plurality of electric excavators 100. Thus, the received power can be even more efficiently distributed. Consequently, even when the system power source 400 has an upper limit for use such as contract power, the power can be more effectively utilized. As a result, both of load reduction on the system power source 400 and response to power request for the electric excavator 100 can be implemented. Consequently, reduction of load on the system power source 400 can be promptly responded.

<Example>

An actual example where received power is distributed to a plurality of electric excavators 100 in Fig. 10 is described.

Fig. 15 is a diagram illustrating a specific example of the case where received power is distributed to a plurality of electric excavators 100.

Here, the distribution amounts of received power are determined by the ratio of remaining operation times calculated by an average of past power consumption of each electric excavator 100 and remaining SOC. Note that the case where received power is distributed to four electric excavators A to D is described.

The average of the past power consumption of the electric excavator A can be determined by the following Equation 1. Furthermore, the distribution amount of received power for the electric excavator A can be determined by the following Equation 2. Note that the same method can apply to the electric excavators B to D.

[Math. 1]

$$h_A[h] = \frac{SOC_A}{P_A^{ave}} \quad \cdots (1)$$

[Math. 2]

$$P_A[kW] = P_{lim} \times \frac{1}{n-1} \times \frac{h_{All} - h_A}{h_{All}} \quad \cdots (2)$$

In Equation 1 and Equation 2, $h_A$ to $h_D$ represent remaining operation times [h] of the electric excavators A to D, $h_{All}$ represents a total remaining operation time [h] obtained by summing up $h_A$ to $h_D$, $SOC_A$ represents a battery remaining amount [kWh] of the electric excavator A, $P_A^{ave}$ represents an average [kW] of power consumption of the electric excavator A, $P_{lim}$ represents contract power [kW] of the system power source 400, $P_A$ represents power [kW] distributed to the electric excavator A, and n is the number of electric excavators.

When the remaining operation times [h] of the electric excavators A to D, SOC, and the battery remaining amount are the ones illustrated, from Equation 1, the remaining operation times $h_A$ to $h_D$ of the electric excavators A to D are 3 h, 2 h, 2 h, and 6 h, respectively.

Then, the ratio of the remaining operation times $h_A$ to $h_D$ of the electric excavators A to D is A:B:C:D=3 h:2 h:2 h:6 h, and hence the distribution ratio is 10:11:11:7.

When the contract power of the system power source 400 is 88 VA, received power of the electric excavators A to D is A:B:C:D=22 kW:25 kW:25 kW:16 kW.

Note that the method for calculating the received power of each electric excavator 100 is not limited to the one from equations such as Equation 1 and Equation 2. For example, a table in which relation between power consumption and received power is written may be prepared and a method for determining received power of each electric excavator 100 on the basis of the table may be employed.

<Description of Power Control Method>

Processing performed by the vehicle controller 120 in the present embodiment described above is implemented by cooperation of software and hardware resources. Specifically, a processor (not shown) such as a CPU (Central Processing Unit) provided to the vehicle controller 120 loads a program for implementing each function of the vehicle controller 120 onto a memory, and executes the program to implement each function performed by the vehicle controller 120.

Thus, the processing performed by the above-mentioned vehicle controller 120 can be regarded as a power control method to be implemented by a processor executing a program recorded in a memory, including chancing, for a work machine that operates by power from the system power source 400 and power from the high voltage storage battery 112, received power that is power received by the work machine from the system power source 400 while the work machine is in operation.

It should be noted that the program for implementing the present embodiment can be provided by communication means and can also be provided while being stored in a recording medium such as a CD-ROM.

While the present embodiment has been described above, the technical scope of the present invention is not limited to the scope of the description of the above-mentioned embodiment. It should be noted that embodiments obtained by adding various changes or modifications to the above-mentioned embodiment are naturally included in the technical scope of the present invention from the description of the claims.

[Reference Signs List]

1 Power control system
14, 16, 17 hydraulic cylinder (work device)
100 Electric excavator (work machine, vehicle body)
110 High voltage circuit
111 AC/DC converter (power reception device)
112 High voltage storage battery (battery)
120 Vehicle controller (controller, vehicle controller)
121 Control arithmetic function unit (processor)
122 Data recording unit (memory)
125 First data transmission/reception unit (data communication device)
130 Hydraulic circuit
200 Power cable
300 Reel type cable container

400 System power source
500 Server (external device, management device)
520 Controller
530 Database

**Claims**

1. A work machine, comprising:

   a vehicle body including a work device;
   a power reception device provided to the vehicle body, and receiving power from a system power source; and
   a battery provided to the vehicle body,
   the work machine operating by received power that is power received by the power reception device from the system power source and power from the battery,
   the work machine further comprising a controller for changing the received power while the vehicle body is in operation.

2. The work machine according to claim 1, wherein the controller is configured to be able to change the received power not only while the vehicle body is in operation but also while the vehicle body is stopped.

3. The work machine according to claim 1, wherein the controller determines received power to be changed on the basis of power consumption that is power consumed by the vehicle body.

4. The work machine according to claim 3, wherein the controller stores therein the power consumption for a predetermined period, and determines received power to be changed on the basis of the stored power consumption for the predetermined period.

5. The work machine according to claim 4, wherein the predetermined period is a period during which the vehicle body is in operation.

6. The work machine according to claim 1, further comprising a data communication device for receiving a signal output from an external device,
   wherein the controller changes the received power on the basis of the signal received by the data communication device.

7. The work machine according to claim 6, wherein the signal received by the data communication device comprises information on the received power that is set by an administrator on the basis of power consumed by a plurality of work machines including the work machine.

8. The work machine according to claim 6, wherein

   the data communication device transmits to the external device information on power consumption that is power consumed by the vehicle body;
   the data communication device receives information on new power to be received from the system power source, which is determined by the external device from the power consumption for a predetermined period on the basis of the information on the power consumption; and
   the controller changes the received power on the basis of the information on the new power received by the data communication device.

9. The work machine according to claim 6, wherein:

   the data communication device transmits to the external device information on power consumption that is power consumed by the vehicle body;
   the data communication device receives information on new power to be received from the system power source, which is determined by the external device on the basis of power consumed by a plurality of work machines including the vehicle body; and
   the controller changes the received power on the basis of the information on the new power received by the data communication device.

10. The work machine according to claim 9, wherein the data communication device receives the information on the new power that is determined by the external device such that power is distributed to the plurality of work machines without exceeding an upper limit of power that can be acquired from the system power source.

11. A power control method to be implemented by a processor executing a program recorded in a memory, the method comprising changing, for a work machine that operates by power from a system power source and power from a battery, received power that is power received by the work machine from the system power source while the work machine is in operation.

12. A power control system, comprising:

a management device for determining, on the basis of power consumption of a work machine that operates by power from a system power source and power from a battery, received power that is power received by the work machine from the system power source; and
a vehicle controller mounted to the work machine, and changing power to be received by the work machine from the system power source to the received power determined by the management device while the work machine is in operation.

# FIG. 1

SAME CONSTRUCTION SITE

SYSTEM POWER SOURCE 1

410

POWER PLANT

POWER UPPER LIMIT BY CONTRACT

400

SYSTEM POWER SOURCE 2

300

200

100

190

500

EP 4 787 652 A1

FIG. 2

ELECTRIC EXCAVATOR

WORKER A

FIG. 3

# FIG. 4

MANUALLY SET ALLOWABLE POWER VALUE FROM VEHICLE BODY SIDE

START

S401
IS VEHICLE BODY STOPPED?

No

Yes

VEHICLE BODY

S403
WORKER MANUALLY SETS ALLOWABLE POWER VALUE ON VEHICLE MONITOR.

S402
DISPLAY ERROR

S404
TRANSMIT DATA ON ALLOWABLE POWER VALUE FROM MONITOR TO VEHICLE CONTROLLER

S405
VEHICLE CONTROLLER TRANSMITS DATA ON ALLOWABLE POWER VALUE TO AC/DC CONVERTER

S406
CONVERT POWER IN ACCORDANCE WITH ALLOWABLE POWER VALUE BY HARDWARE OF AC/DC CONVERTER.

END

# FIG. 5

AUTOMATICALLY SET ALLOWABLE POWER VALUE
FROM VEHICLE BODY SIDE

START

S501

INVERTER CONTROL UNIT TRANSMITS
POWER CONSUMED FOR PREDETERMINED
PERIOD OF LAST KEY ON TO MEMORY

S502

TRANSMIT DATA FROM MEMORY IN VEHICLE
CONTROLLER TO CONTROL ARITHMETIC
APPARATUS

S503

CALCULATE ALLOWABLE POWER VALUE BY
CONTROL ARITHMETIC DEVICE IN
VEHICLE CONTROLLER

**VEHICLE BODY**

S504

VEHICLE CONTROLLER
TRANSMITS DATA ON ALLOWABLE
POWER VALUE TO AC/DC CONVERTER

S505

CONVERT POWER IN ACCORDANCE WITH
ALLOWABLE POWER VALUE BY HARDWARE
OF AC/DC CONVERTER.

END

# FIG. 6

MANUALLY SET ALLOWABLE POWER VALUE FROM SERVER SIDE

START

**SERVER**

WORKER B MANUALLY INPUTS ALLOWABLE POWER VALUE — S601

CONTROLLER RECOGNIZES ALLOWABLE POWER VALUE — S602

TRANSMIT DATA ON ALLOWABLE POWER VALUE FROM CONTROLLER TO DATA TRANSMISSION/RECEPTION UNIT — S603

TRANSMIT DATA FROM DATA TRANSMISSION/ RECEPTION UNIT TO DATA TRANSMISSION/ RECEPTION UNIT IN VEHICLE BODY IN WIRELESS MANNER — S604

**VEHICLE BODY**

DATA TRANSMISSION/RECEPTION UNIT IN VEHICLE BODY RECEIVES DATA ON ALLOWABLE POWER VALUE FROM DATA TRANSMISSION/RECEPTION UNIT IN SERVER — S605

DATA TRANSMISSION/RECEPTION UNIT IN VEHICLE BODY TRANSMITS DATA ON ALLOWABLE POWER VALUE TO VEHICLE CONTROLLER — S606

VEHICLE CONTROLLER TRANSMITS DATA ON ALLOWABLE POWER VALUE TO AC/DC CONVERTER — S607

CONVERT POWER IN ACCORDANCE WITH ALLOWABLE POWER VALUE BY HARDWARE OF AC/DC CONVERTER. — S608

END

# FIG. 7

MANUALLY SET ALLOWABLE POWER VALUE FROM SERVER SIDE

120

VEHICLE
CONTROLLER

520

CONTROLLER

530

DATABASE

TRANSMIT DATA    S701

STORE DATA    S702

ACQUIRE DATA    S703

S704

CONTROLLER
MANUALLY INPUTS
ALLOWABLE POWER
VALUE

TRANSMIT INPUT DATA
(ALLOWABLE POWER VALUE)

S706    S705

CHANGE ALLOWABLE
POWER VALUE

## FIG. 8

MANUALLY SET ALLOWABLE POWER VALUE FROM SERVER SIDE

START

VEHICLE BODY

S801
INVERTER CONTROL UNIT TRANSMITS KEY ON/OFF AND POWER CONSUMPTION DATA TO VEHICLE CONTROLLER

S802
DATA TRANSMISSION/ RECEPTION UNIT IN VEHICLE BODY TRANSMITS DATA TO DATA TRANSMISSION/ RECEPTION UNIT IN SERVER IN WIRELESS MANNER

S803
DATA TRANSMISSION/ RECEPTION UNIT TRANSMITS DATA TO CONTROLLER

S804
CONTROLLER TRANSMITS DATA TO DATABASE

S805
DATABASE RECEIVES DATA FROM CONTROLLER AND ACCUMULATES DATA THEREIN

SERVER

S806
CONTROLLER CALCULATES ALLOWABLE POWER VALUE FROM AMOUNT OF POWER CONSUMED BY ELECTRIC CONSTRUCTION MACHINE IN PREDETERMINED PERIOD DURING LAST KEY ON.

S807
CONTROLLER TRANSMITS ALLOWABLE POWER VALUE TO DATA TRANSMISSION/ RECEPTION UNIT

S808
DATA TRANSMISSION/ RECEPTION UNIT TRANSMITS DATA TO DATA TRANSMISSION/ RECEPTION UNIT IN VEHICLE BODY IN WIRELESS MANNER

S809
DATA TRANSMISSION/ RECEPTION UNIT IN VEHICLE BODY RECEIVES DATA ON ALLOWABLE POWER VALUE FROM DATA TRANSMISSION/ RECEPTION UNIT IN SERVER

S810
DATA TRANSMISSION/ RECEPTION UNIT IN VEHICLE BODY TRANSMITS DATA ON ALLOWABLE POWER VALUE TO VEHICLE CONTROLLER

S811
VEHICLE CONTROLLER RECEIVES DATA ON ALLOWABLE POWER VALUE

VEHICLE BODY

S812
TRANSMIT DATA ON ALLOWABLE POWER VALUE FROM VEHICLE CONTROLLER AC/DC CONVERTER

S813
CONVERT POWER IN ACCORDANCE WITH ALLOWABLE POWER VALUE BY HARDWARE OF AC/ DC CONVERTER.

END

# FIG. 9

AUTOMATICALLY SET ALLOWABLE POWER VALUE FROM SERVER SIDE

## FIG. 10

AUTOMATICALLY SET ALLOWABLE POWER VALUE
FROM SERVER SIDE (PLURALITY OF WORK MACHINES)

START

**S1001**
PLURALITY OF INVERTER CONTROL UNITS TRANSMIT KEY ON/OFF AND POWER CONSUMPTION TO VEHICLE CONTROLLER

**S1002**
PLURALITY OF AC/DC CONVERTERS TRANSMIT DATA ON SOC TO VEHICLE CONTROLLER

VEHICLE BODY

**S1003**
DATA TRANSMISSION/ RECEPTION UNIT IN VEHICLE BODY TRANSMITS DATA TO DATA TRANSMISSION/ RECEPTION UNIT IN SERVER IN WIRELESS MANNER

**S1005**
DATA TRANSMISSION/RECEPTION UNIT IN SERVER RECEIVES, FROM POWER PLANT, ALLOWABLE POWER VALUE OF SYSTEM POWER SOURCE WITHIN CONSTRUCTION SITE, AND TRANSMITS VALUE TO CONTROLLER.

**S1004**
DATA TRANSMISSION/ RECEPTION UNIT TRANSMITS DATA TO CONTROLLER

**S1006**
CONTROLLER TRANSMITS DATA TO DATABASE

**S1011**
DATA TRANSMISSION/ RECEPTION UNIT IN EACH VEHICLE BODY RECEIVES DATA ON ALLOWABLE POWER VALUE FROM DATA TRANSMISSION/ RECEPTION UNIT IN SERVER

**S1007**
DATABASE RECEIVES DATA FROM CONTROLLER AND ACCUMULATES DATA THEREIN

**S1012**
DATA TRANSMISSION/ RECEPTION UNIT IN VEHICLE BODY TRANSMITS DATA ON ALLOWABLE POWER VALUE TO VEHICLE CONTROLLER

**S1008**
CONTROLLER CALCULATES DISTRIBUTED POWER NECESSARY FOR EACH VEHICLE BODY FROM KEY ON/OFF, POWER CONSUMPTION, SOC, AND POWER SUPPLY CONTRACT POWER VALUE.

SERVER

**S1013**
VEHICLE CONTROLLER RECEIVES DATA ON ALLOWABLE POWER VALUE

VEHICLE BODY

**S1009**
CONTROLLER TRANSMITS ALLOWABLE POWER VALUE TO DATA TRANSMISSION/ RECEPTION UNIT

**S1014**
TRANSMIT DATA ON ALLOWABLE POWER VALUE FROM VEHICLE CONTROLLER TO AC/DC CONVERTER

**S1010**
DATA TRANSMISSION/ RECEPTION UNIT TRANSMITS DISTRIBUTED POWER NECESSARY FOR EACH VEHICLE BODY TO DATA TRANSMISSION/ RECEPTION UNIT IN EACH VEHICLE BODY IN WIRELESS MANNER

**S1015**
CONVERT POWER IN ACCORDANCE WITH ALLOWABLE POWER VALUE BY HARDWARE OF AC/DC CONVERTER.

END

# FIG. 11

AUTOMATICALLY SET ALLOWABLE POWER VALUE FROM SERVER SIDE
(PLURALITY OF WORK MACHINES)

410 — POWER PLANT

120 — VEHICLE CONTROLLER *PLURAL

520 — CONTROLLER

530 — DATABASE

TRANSMIT DATA — S1101

TRANSMIT DATA (CONTRACT POWER VALUE) — S1102

STORE DATA — S1103

ACQUIRE DATA — S1104

S1105 — CONTROLLER CALCULATES ALLOWABLE POWER VALUE

TRANSMIT INPUT DATA (ALLOWABLE POWER VALUE) — S1106

S1107 — CHANGE ALLOWABLE POWER VALUE

# FIG. 12

※HIGH VOLTAGE RELAY=ON IS "OPERATING",
HIGH VOLTAGE RELAY=OFF IS "STOPPED".

(a)

CURRENT

Δt

OPERATING OR STOPPED

OPERATING          OPERATING          STOPPED

STOPPED            STOPPED

CALCULATE ALLOWABLE POWER VALUE FROM AMOUNT OF POWER CONSUMED BY ELECTRIC CONSTRUCTION MACHINE IN PREDETERMINED PERIOD DURING LAST KEY ON.

POWER CONSUMPTION

TIME

(b)

CURRENT

Δt2          Δt1

OPERATING OR STOPPED

OPERATING          OPERATING          STOPPED

STOPPED            STOPPED

POWER DURING KEY OFF IS IGNORED.

POWER CONSUMPTION

TIME

EP 4 787 652 A1

# FIG. 13

STATE TRANSITION
(MODE)

(a) KEY=OFF *LOW VOLTAGE IS OFF, HIGH VOLTAGE IS OFF — STOPPED

(b) ACC=ON *LOW VOLTAGE IS ON, HIGH VOLTAGE IS OFF — STOPPED

(c) HIGH VOLTAGE MAIN RELAY =ON *LOW VOLTAGE IS ON, HIGH VOLTAGE IS ON — OPERATING

(d) HIGH VOLTAGE MAIN RELAY =OFF *LOW VOLTAGE IS ON, HIGH VOLTAGE IS OFF — STOPPED

(e) KEY=OFF *LOW VOLTAGE IS OFF, HIGH VOLTAGE IS OFF — STOPPED

FIG. 14

(a)

Image diagram of power management

(b) CASE OF ELECTRIC CONSTRUCTION MACHINE WITH ONLY BATTERY

(c) CASE OF ELECTRIC CONSTRUCTION MACHINE WITH ONLY CABLE

(d) CASE OF ELECTRIC CONSTRUCTION MACHINE WITH BATTERY AND CABLE IN COMBINATION

EP 4 787 652 A1

## FIG. 15

■RATIO OF REMAINING OPERATION TIMES
A:B:C:D＝3h：2h：2h：6h

FROM EQUATION (2),
DISTRIBUTED AMOUNTS (kW) is
A:B:C:D=22:25:25:16

88kW(AC)

■DEVICE(D)、BATTERY CAPACITY200kWh
・AVERAGE OF PAST POWER CONSUMPTION AMOUNT
　＝20kw
・REMAINING SOC＝60%
・REMAINING BATTERY CAPACITY＝200x0.6＝120kWh
・REMAINING OPERATION TIME＝120/20＝6h

■ DEVICE(C)、BATTERY CAPACITY200kWh
・AVERAGE OF PAST POWER CONSUMPTION AMOUNT
　＝30kw
・REMAINING SOC ＝60%
・REMAINING BATTERY CAPACITY ＝200x0.6＝120kWh
・REMAINING OPERATION TIME ＝60/30＝2h

■ DEVICE(B)、BATTERY CAPACITY 200kWh
・AVERAGE OF PAST POWER CONSUMPTION AMOUNT ＝30kw
・REMAINING SOC ＝30%
・REMAINING BATTERY CAPACITY ＝200x0.3＝60kWh
・REMAINING OPERATION TIME ＝60/30＝2h

■ DEVICE(A)、BATTERY CAPACITY 200kWh
・AVERAGE OF PAST POWER CONSUMPTION AMOUNT ＝20kw
・REMAINING SOC ＝30%
・REMAINING BATTERY CAPACITY ＝200x0.3＝60kWh
・REMAINING OPERATION TIME ＝60/20＝3h

## INTERNATIONAL SEARCH REPORT

| International application No. |
|---|
| **PCT/JP2024/033885** |

**A. CLASSIFICATION OF SUBJECT MATTER**

*H02J 3/14*(2006.01)i; *E02F 9/00*(2006.01)i; *H02J 3/32*(2006.01)i; *H02J 13/00*(2006.01)i
FI:   H02J3/14; E02F9/00 C; H02J3/32; H02J13/00 311T

According to International Patent Classification (IPC) or to both national classification and IPC

**B. FIELDS SEARCHED**

Minimum documentation searched (classification system followed by classification symbols)

H02J3/14; E02F9/00; H02J3/32; H02J13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-039239 A (HITACHI CONSTRUCTION MACHINERY TIERRA CO., LTD.) 12 March 2020 (2020-03-12) paragraphs [0068]-[0128], fig. 1-10 | 1-2, 6-7, 11-12 |
| A | | 3-5, 8-10 |
| X | JP 2015-192476 A (SHINMAYWA INDUSTRIES, LTD.) 02 November 2015 (2015-11-02) paragraphs [0020]-[0051], fig. 1-6 | 1-3, 6, 11 |
| A | | 4-5, 7-10, 12 |
| A | JP 2022-122537 A (NISSAN MOTOR CO., LTD.) 23 August 2022 (2022-08-23) entire text, all drawings | 1-12 |
| A | JP 2012-060718 A (TAKENAKA CORPORATION) 22 March 2012 (2012-03-22) entire text, all drawings | 1-12 |

✓ Further documents are listed in the continuation of Box C.    ✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 October 2024** | **12 November 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**

| International application No. |
| --- |
| **PCT/JP2024/033885** |

**C.    DOCUMENTS CONSIDERED TO BE RELEVANT**

| Category* | Citation of document, with indication, where appropriate, of the relevant passages | Relevant to claim No. |
| --- | --- | --- |
| A | Microfilm of the specification and drawings annexed to the request of Japanese Utility Model Application No. 47424/1991 (Laid-open No. 131143/1992) (AICHI CORPORATION) 02 December 1992 (1992-12-02), entire text, all drawings | 1-12 |

Form PCT/ISA/210 (second sheet) (July 2022)

## INTERNATIONAL SEARCH REPORT
### Information on patent family members

International application No.

**PCT/JP2024/033885**

| Patent document cited in search report | | | Publication date (day/month/year) | Patent family member(s) | Publication date (day/month/year) |
|---|---|---|---|---|---|
| JP | 2020-039239 | A | 12 March 2020 | US 2021/0025132 A1 paragraphs [0077]-[0136], fig. 1-10 WO 2020/049805 A1 EP 3849047 A1 KR 10-2020-0106548 A CN 111869040 A | |
| JP | 2015-192476 | A | 02 November 2015 | (Family: none) | |
| JP | 2022-122537 | A | 23 August 2022 | (Family: none) | |
| JP | 2012-060718 | A | 22 March 2012 | (Family: none) | |
| JP | 4-131143 | U1 | 02 December 1992 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020039239 A